Europäisches Patentamt

**European Patent Office**

**Office européen des brevets**

(11) Numéro de publication: **0 020 214**
**B1**

(12) **FASCICULE DE BREVET EUROPEEN**

(51) Int. Cl.³: **F 16 C 11/08**, B 62 D 7/16, B 60 G 7/00

(45) Date de publication du fascicule du brevet:
**14.07.82**

(21) Numéro de dépôt: **80400637.7**

(22) Date de dépôt: **09.05.80**

(54) **Articulation à rotule.**

(30) Priorité: **15.05.79 FR 7912295**

(43) Date de publication de la demande:
**10.12.80 Bulletin 80/25**

(45) Mention de la délivrance du brevet:
**14.07.82 Bulletin 82/28**

(84) Etats contractants désignés:
**DE GB IT**

(56) Documents cités:
**FR-A-1 089 843**
**FR-A-1 330 792**
**FR-A-1 558 729**

(73) Titulaire: **SOCIETE ANONYME D.B.A., 43/47 Avenue de la Grande Armée, F-75116 Paris (FR)**

(72) Inventeur: **Morin, Gérard, 159 Rue Pasteur, F-77 Conde Sainte Libiaire (FR)**

(74) Mandataire: **Le Moenner, Gabriel et al, SERVICE BREVETS BENDIX 44, Rue François 1er, F-75008 Paris (FR)**

BUNDESDRUCKEREI BERLIN

## Articulation à rotule

L'invention a pour objet une articulation à rotule, notamment pour suspension ou direction de véhicule automobile; elle vise en particulier une articulation du type préchargé et à rattrapage automatique de jeu.

Les rotules connues comportent généralement un boîtier dans lequel la rotule sphérique d'un pivot est coiffée par un coussinet en matière plastique, ce dernier étant maintenu dans ledit boîtier par une rondelle de fermeture.

Dans les articulations de ce type, la précharge est habituellement assurée lors du montage par une compression initiale du coussinet lorsque celui-ci est constitué par un ou plusieurs blocs de matériau élastomère; en cas d'usure du coussinet, on constate que la précharge initiale disparaît n'assurant plus ainsi les caractéristiques souhaitées de fonctionnement de l'articulation. Une autre solution consiste à employer des ressorts ou des rondelles élastiques de façon à obtenir la précharge désirée de l'articulation; cette solution a pour inconvénient d'être coûteuse car elle nécessite des pièces supplémentaires dont le montage est complexe.

Afin d'essayer d'éliminer ces inconvénients une première solution a été présentée dans le brevet français 1.588.729 qui propose une articulation à rotule dans laquelle une rotule sphérique munie d'une tige filetée est montée pivotante dans un boîtier par l'intermédiaire d'une cuvette en matière plastique comportant un talon annulaire prenant appui sur un élément de fermeture dudit boîtier de façon à supporter un des deux hémisphères de ladite rotule sphérique définis par un plan équatorial perpendiculaire à l'axe de ladite tige filetée, ladite cuvette comportant également une partie munie d'une première série de fentes réparties régulièrement et s'étendant le long de méridiens de ladite rotule sphérique de façon à subdiviser ladite partie en segments en forme de pétales disposés entre l'autre desdits deux hémisphères et le fond rentrant sphérique ou tronçonique dudit boîtier.

Cependant, cette solution n'est pas satisfaisante pour la raison suivante. Lorsque l'on vient comprimer l'articulation en exerçant un effort axial important sur la tige filetée de la rotule, on constate que cette dernière se déplace axialement par rapport au boîtier à l'encontre des efforts élastiques exercés par la portion de la cuvette formant rondelle élastique; ce déplacement est particulièrement néfaste lorsqu'une telle articulation est utilisée dans une direction de véhicule car il a pour conséquence un jeu axial de l'articulation qui provoque une course morte lorsque le conducteur applique un couple au volant du véhicule.

L'invention a pour but de remédier à ce défaut et propose une articulation à rotule du type décrit ci-dessus, caractérisée en ce que lesdits pétales sont en forme de coins et sont reliés audit talon annulaire par des éléments de liaison venus de matière avec ledit talon annulaire et lesdits pétales en forme de coins, lesdits éléments de liaison s'étendant selon des méridiens et présentant une section transversale réduite par rapport auxdits pétales et audit ralon qui en permet la flexion ou le flambage dans l'espace défini entre la rotule sphérique et la paroi interne du boîtier lors de l'assemblage de l'articulation pour que lesdits éléments de liaison sollicitent élastiquement les pétales en forme de coins en vue d'assurer la précharge de l'articulation et le rattrapage automatique des jeux.

L'invention sera maintenant décrite en se référant aux dessins annexés dans lesquels:

— la figure 1 est une vue en coupe axiale partielle d'une articulation à rotule selon l'invention;

— la figure 2 est une vue latérale de la cuvette représentée à la figure 1;

— la figure 3 est une vue agrandie suivant la flèche F de la cuvette représentée à la figure 2; et

— la figure 4 est une vue en coupe suivant la ligne 4-4 de la figure 3.

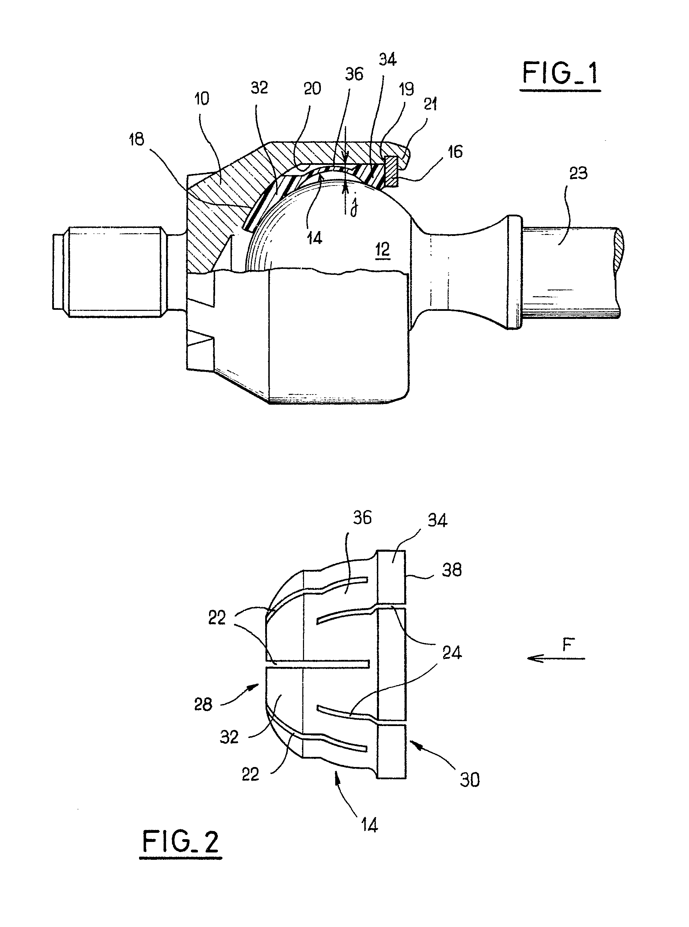

L'articulation à rotule représentée à la figure 1 comprend un boîtier 10 dans lequel est montée pivotante une rotule sphérique 12 par l'intermédiaire d'une cuvette 14, l'ensemble étant maintenu à l'intérieur du boîtier 10 par une rondelle de fermeture 16.

Le boîtier 10 comporte un alésage borgne étagé 20 dont la portion de plus faible diamètre reçoit la cuvette 14 qui est en contact avec une surface sphérique creuse 18 formée à l'extrémité borgne de l'alésage 20; la rondelle de fermeture 16 étant fixée dans la portion de plus grand diamètre de l'alésage 20 par sertissage de la partie extrême 21 du boîtier 10.

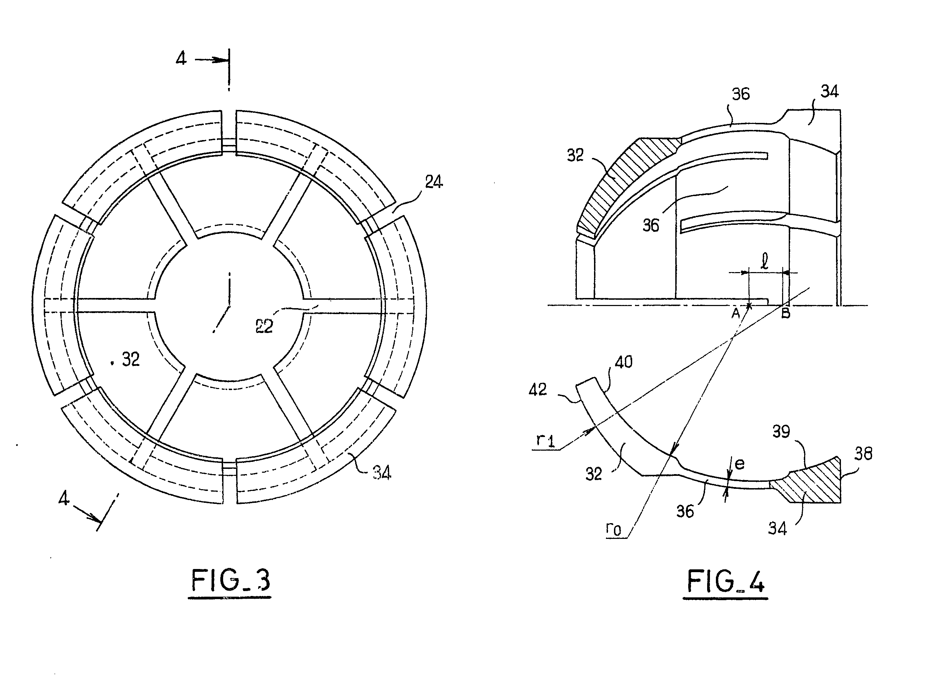

La cuvette 14 (représentée isolément à la figure 2 et en coupe aux figures 3 et 4) est réalisée dans une matière plastique possédant de bonnes caractéristiques d'usure et de friction. La cuvette 14 est munie de deux séries de fentes 22 et 24 qui s'étendent alternativement depuis les deux parties extrêmes 28 et 30, ces deux parties étant chacune en contact avec un des deux hémisphères de la rotule sphérique 12 définis par un plan équatorial perpendiculaire à l'axe de la tige 23 de la rotule. Les fentes 22 et 24 s'étendent alternativement depuis les deux parties extrêmes 28 et 30, le long de méridiens répartis circonférentiellement jusqu'au delà du plan équatorial défini plus haut. Dans le mode de réalisation représenté, chacune des deux séries comprend six fentes qui subdivisent chacune deux parties extrêmes 28 et 30 en six éléments en forme de pétales 32 et 34 respectivemet. Les parties extrêmes des fentes 22 et 24 définissent entre elles douze éléments 36 en forme de lames. Comme on peut le constater l'épaisseur »e« des lames 36 est inférieure au jeu radial »j« existant entre la rotule sphérique 12 et la paroi de l'alésage 20 du boîtier 10. La partie extrême (ou talon annulaire 30) de la cuvette 12 est interposée entre un desdits deux hémisphères et la rondelle de fermeture 16 et prend appui sur cette dernière par l'intermédiaire d'un talon 38 venu de matière avec la cuvette. Le profil sphérique interne 39 des éléments 34 a un rayon égal à celui de la rotule sphérique 12. La partie extrême 28 est divisée en six éléments en forme de pétales 32 présentant une forme de coin; en effet, comme on peut le constater à la figure 4, les profils sphériques interne 40 et externe 42 ont des rayons $r_0$ et $r_1$ égaux aux rayons de la sphère 12 et de la surface creuse 18 mais leurs points de concours respectifs A et B avec l'axe général de la cuvette 14 sont espacés d'une distance 1.

L'assemblage de l'articulation représentée à la figure 1 s'effectue de la manière suivante:

La rotule sphérique 12 préalablement coiffée élastiquement de la cuvette 14 est introduite dans le boîtier 10 et est maintenue pressée en appui contre la surface sphérique creuse 18 au moyen d'un effort appliqué sur la tige 23. La partie extrême 30 de la cuvette 12 est poussée en position à l'aide de la rondelle de fermeture 16 qui prend appui sur le talon 38 et vient au contact de la paroi 19 délimitant les deux portions de l'alésage étagé 20. Après avoir effectué le sertissage de la partie extrême 21 du boîtier 10 on supprime l'effort appliqué sur la rotule sphérique, les éléments en forme de coin 32 effectuant alors le rattrapage des jeux sous l'action de la poussée transmise par les lames 36. En effet, la cuvette est montée de telle façon que les lames soient arc-boutées et engendrent un effort de poussée de direction axiale sur les coins 32 permettant d'obtenir le rattrapage automatique de jeux et la précharge désirée de l'articulation.

»L'angle« des coins 32 grâce aux caractéristiques techniques exposées plus haut est légèrement supérieur à l'angle de frottement entre la rotule sphérique 12 et la cuvette 14 de façon qu'il n'y ait pas coincement et de façon que la force d'expulsion des coins 32 sous l'effet des efforts de compression appliqués à la rotule lors de son utilisation, soit compensée par la poussée axiale des lames 36.

**Revendications**

1. Articulation en à rotule notamment pour suspension ou direction de véhicule automobile dans laquelle une rotule sphérique (12) munie d'une tige (23) filetée est montée pivotante dans un boîtier (10) par l'intermédiaire d'une cuvette (14) en matière plastique comportant un talon annulaire (30) prenant appui sur un élément de fermeture (16) dudit boîtier de façon à supporter un des deux hémisphères de ladite rotule sphérique définis par un plan équatorial perpendiculaire à l'axe de ladite tige filetée, ladite cuvette comportant également une partie (28) munie d'une première série de fentes (22) réparties régulièrement et s'étendant le long de méridiens de ladite rotule sphérique de façon à subdiviser ladite partie en segments en forme de pétales (32) disposés entre l'autre desdits deux hémisphères et le fond rentrant sphérique ou tronçonique (18) dudit boîtier, caractérisée en ce que lesdits pétales sont forme de coins et sont reliés audit talon annulaire par des éléments de liaison (36) venus de matière avec ledit talon annulaire et lesdits pétales en forme de coins, lesdits éléments de liaison s'étendant selon des méridiens et présentant une section transversale réduite par rapport auxdits pétales et audit talon qui en permet la flexion ou le flambage dans l'espace défini entre la rotule sphérique (12) et la paroi interne (20) du boîtier lors de l'assemblage de l'articulation pour que lesdits éléments de liaison sollicitent élastiquement les pétales en forme de coins en vue d'assurer la précharge de l'articulation et le rattrapage automatique des jeux.

2. Articulation à rotule selon la revendication 1, caractérisée en ce que ledit talon annulaire (30) est également muni d'une deuxième série de fentes (24) réparties régulièrement qui s'étendent le long de méridiens de ladite rotule sphérique, lesdites première et deuxième séries de fentes (22, 24) s'étendant en nombre identique et alternativement au-delà dudit plan équatorial de façon à définir entre elles lesdits éléments de liaison (36).

**Patentansprüche**

1. Kugelgelenk, insbesondere für die Aufhängung oder Lenkung eines Kraftfahrzeuges, bei dem eine mit einer Gewindestange (23) versehene Gelenkkugel (12) in einer gehäuseartigen Gelenkpfanne (10) mittels eines aus Kunststoff bestehenden schalenförmigen Einsatzes (14) schwenkbar gelagert ist, wobei der Einsatz einen Ringwulst (30) aufweist, der an einem Sicherungselement (16) der Gelenkpfanne so anliegt, daß er eine von zwei Halbkugeln der Gelenkkugel abstützt, die durch eine auf der Achse der Gewindestange senkrecht stehende Äquatorebene definiert sind, und wobei der Einsatz ferner einen Abschnitt (28) mit einer ersten Reihe von Schlitzen (22) aufweist, die gleichmäßig verteilt sind und die sich entlang Meridianen der Gelenkkugel erstrecken, derart, daß sie den besagten Abschnitt (28) des Einsatzes in blattförmige Segmente (32) unterteilt, die zwischen der anderen der beiden Halbkugeln und dem sphärisch oder kegelstumpfförmig zurückgebogenen Boden (18) der Gelenkpfanne angeordnet sind, dadurch gekennzeichnet, daß die Segmente (32) keil- bzw. winkelförmig ausgebildet und mit dem Ringwulst (30) über Verbindungsabschnitte (36) verbunden sind, die aus dem Material des Ringwulstes (30) und der Segmente (32) geformt sind, wobei die Verbindungsabschnitte sich entlang Meridianen erstrecken und einen bezüglich der Segmente und des Ringwulstes verringerten Querschnitt aufweisen, was ein Abbiegen bzw. Abknicken im Raum zwischen der Gelenkkugel (12) und der Innenwand (20) der Gelenkpfanne beim Zusammenbau des Kugelgelenkes erlaubt, damit die Verbindungsabschnitte zur Sicherstellung der Vorspannung des Kugelgelenkes und des selbsttätigen Spielausgleiches die Segmente elastisch vorspannen.

2. Kugelgelenk nach Anspruch 1, dadurch gekennzeichnet, daß der Ringwulst (30) in gleicher Weise mit einer zweiten Reihe von gleichmäßig verteilten Schlitzen (24) versehen ist, die sich entlang Meridianen der Gelenkkugel erstrecken, wobei sich die erste und zweite Reihe von Schlitzen (22, 24) in gleicher Anzahl und bezüglich der besagten Äquatorebene abwechselnd so erstrecken, daß sie zwischen sich die Verbindungsabschnitte (36) bilden.

## Claims

1. Ball joint especially for suspension or steering of an automobile vehicle in which a spherical ball (12) equipped with a stem (23) is assembled to pivot in a housing (10) by means of a bearing member (14) made from plastics material consisting of an annular flange (30) which is supported on a closing element (16) of said housing in such a manner as to support one of the two hemispheres of said spherical ball defined by an equatorial plane perpendicular to the axis of said stem, said bearing member consisting also of a part (28) provided with a first series of slots (22) distributed regularly and extending along the meridians of said spherical ball in such a manner as to sub-divide said part into segments in the form of petals (32) arranged between the other of said two hemispheres and the spherical or truncated conical inset bottom (18) of said housing, characterized in that said pedals are in the form of wedges and are connected to said annular flange by connection elements (36) integral with said annular flange and said petals in the form of wedge, said connection elements extending along the meridian lines and presenting a reduced transverse cross-section with respect to said petals and to said flange which permits the bending or buckling thereof in the space defined between the spherical ball (12) and the internal wall (20) of the housing on assembly of the articulated joint so that said connection elements elastically load the petals in the form of wedges with a view to ensuring the preloading of the joint and the automatic taking up of the play.

2. Ball joint according to claim 1, characterized in that said annular flange (30) is also provided with a second series of slots (24) distributed regularly which extend along the meridian lines of said spherical ball, said first and second series of slots (22, 24) extending in identical number and in alternating pattern beyond said equatorial plane in such a manner as to define said connection elements (36) between themselves.

FIG_1

FIG_2

FIG_3

FIG_4

0 020 214